Europäisches Patentamt

European Patent Office

Office européen des brevets

(19)

(11) **EP 0 570 823 B1**

(12) **EUROPÄISCHE PATENTSCHRIFT**

(45) Veröffentlichungstag und Bekanntmachung des Hinweises auf die Patenterteilung:
**10.11.1999  Patentblatt 1999/45**

(51) Int Cl.$^6$: **C07F 9/09**

(21) Anmeldenummer: **93107702.8**

(22) Anmeldetag: **12.05.1993**

(54) **Verfahren zur Herstellung von phosphorhaltigen Alkoxylierungsprodukten**

Process for preparing phosphor containing alkoxylation products

Procédé de préparation de produits alcoxylation contenant du phosphore

(84) Benannte Vertragsstaaten:
**BE DE ES FR GB IT NL**

(30) Priorität: **18.05.1992  DE 4216437**

(43) Veröffentlichungstag der Anmeldung:
**24.11.1993  Patentblatt 1993/47**

(73) Patentinhaber: **BASF Schwarzheide GmbH
01986 Schwarzheide (DE)**

(72) Erfinder:
• **Mueller-Hagen, Gerd, Dr.
W-6700 Ludwigshafen (DE)**
• **Pretzsch, Regina
O-7816 Schipkau (DE)**
• **Guettes, Bernd
O-7981 Sallgast (DE)**

• **Grossmann, Hans-Juergen
O-7817 Schwarzheide (DE)**

(74) Vertreter: **Karau, Wolfgang, Dr. et al
BASF Aktiengesellschaft,
Patentabteilung ZDX - C 6
67056 Ludwigshafen (DE)**

(56) Entgegenhaltungen:
| | |
|---|---|
| DD-A- 264 118 | DE-A- 2 407 006 |
| FR-A- 1 546 601 | GB-A- 985 752 |
| US-A- 3 010 988 | US-A- 3 155 710 |
| US-A- 3 927 151 | |

Bemerkungen:
Die Akte enthält technische Angaben, die nach dem Eingang der Anmeldung eingereicht wurden und die nicht in dieser Patentschrift enthalten sind.

## Beschreibung

Die Erfindung betrifft ein Verfahren zur Herstellung von phosphorhaltigen Alkoxylierungsprodukten, die als Flammschutzmittel in Polyurethanen, insbesondere flammgeschützten Polyurethan-Hart- und Weichschäumen, angewendet werden können. Die Herstellung von phosphorhaltigen Alkoxylierungsprodukten, insbesondere von organischen Phosphorsäureestern, Phosphonaten oder halogensubstituierten Alkylphosphaten ist nach mehreren Verfahren möglich. Es werden vor allem Phosphorsäure, phosphorige Säure oder Phosphortrihalogenid, insbesondere Phosphortrichlorid, bzw. Phosphoroxihalogenid, insbesondere Phosphoroxichlorid, eingesetzt und mit den Alkoxylierungssubstanzen wie Ethylenoxid, Propylenoxid und/oder Epichlorhydrin umgesetzt. Die Umsetzung wird bei Temperaturen von 0 bis 100°C drucklos oder bei leichtem Überdruck durchgeführt. Zur Verbesserung der Anlagerungsgeschwindigkeit wird die Reaktion häufig durch Katalysatoren gesteuert. Dafür sind im Stand der Technik viele Varianten bekannt. Nach DE-AS 2 407 006 werden organische Aluminiumverbindungen in Kombination mit Aminen oder Phosphinen als sekundäre Stabilisatoren eingesetzt. Diese Katalysator/Stabilisatorkombination ist ganz speziell auf die Umsetzung von Halogeniden des dreiwertigen Phosphors ausgerichtet und wirkt nur dort. Außerdem kann es, ähnlich wie bei der Verwendung von Aluminiumchlorid als Katalysator, zur Ausscheidung unlöslicher Niederschläge kommen, wobei die Reaktion sofort zum Stillstand kommt.

Ähnlich speziell ist die Katalyse mit Vanadiumverbindungen gemäß US-PS 3 155 710. Dort werden Phosphorsäureester durch Umsetzung von aliphatischen und aromatischen Alkoholen mit Phosphoroxichlorid hergestellt. Für Alkoxylierungen sind diese Katalysatoren ungeeignet.

In DE-OS 1 921 504 ist der Einsatz von Titan-(III)-chlorid in Form einer wäßrigen, salzsäurehaltigen Lösung als Alkoxylierungskatalysator beschrieben. In DE-PS 848 946 erfolgt der Einsatz von Titan- oder Zirkoniumhalogenid, in DD-AP 264 118 wird als Katalysator eine Kombination von Titanverbindungen mit organischen und/oder anorganischen Eisenverbindungen vorgeschlagen. Die zusätzliche Verwendung von Eisenverbindungen läßt die Farbzahl der Produkte ansteigen, außerdem kommt es zu unerwünschter Nebenproduktbildung.

FR-A-1 546 601 beschreibt ein kontinuierliches Verfahren zur Herstellung von Phosphorsäureestern durch Umsetzung von Phosphoroxichlorid mit Alkylenoxiden. Als Katalysator wird Butyltitanat in einer Menge von 0,8 Gew.-% eingesetzt. Das entstehende Reaktionsprodukt muß mit Alkalihydroxid und Wasser aufgearbeitet werden.

In US-A 3 557 260 wird die Verwendung von Sulfaten verschiedener Elemente vorgeschlagen. Hierbei kommt es jedoch ebenfalls zur Bildung von organischen und anorganischen Nebenprodukten.

Möglich ist auch die z.B. in DD-WP 125 035 beschriebene Inaktivierung bzw. Zerstörung des Titanhalogenid-Katalysators durch Zugabe einer stöchiometrischen Wassermenge oder die Wäsche der phosphorhaltigen Alkoxylierungsprodukte mit Wasser oder Alkalien. Derartige Nachbehandlungen zur Zerstörung bzw. Inaktivierung des Katalysators haben jedoch Nachteile. Sie erfordern zusätzlich Reaktoren, es kommt zu einer Verschlechterung der Raum-Zeit-Ausbeute, und es treten Produktverluste auf. Die anfallenden Waschwässer müssen aufwendig entsorgt werden.

Aufgabe der Erfindung ist es, ein Verfahren zur Herstellung von phosphorhaltigen Alkoxylierungsprodukten durch Umsetzung von Phosphortri- und/oder Phosphoroxihalogenid mit Alkylenoxiden unter Vermeidung von Nebenreaktionen und unter Verzicht auf zusätzliche Wasser- bzw. Alkaliwäsche der phosphorhaltigen Alkoxylierungsprodukte zu entwickeln.

Erfindungsgemäß wird die Aufgabe dadurch gelöst, daß Phosphortri- und/oder Phosphoroxihalogenide bei Temperaturen von 0 bis 100°C bei Normaldruck oder Drücken bis 0,1 MPa unter Verwendung von Katalysatoren mit Alkylenoxiden umgesetzt werden und als Katalysatoren Verbindungen der allgemeinen Formel

$$Me(OR)_n$$

mit

Me - Metallion
n = 1 bis 4
R - lineare oder verzweigte Alkylgruppen mit 2 bis 8 Kohlenstoffatomen in einer Menge bis 0,2 Gew.-%, bezogen auf die eingesetzte Phosphorverbindung,

eingesetzt werden sowie das verwendete Alkylenoxid das gleiche Kohlenstoffgerüst sowie die gleiche oder um 1 verminderte Zahl von Kohlenstoffatomen aufweist wie R.

Die Verbindungen der allgemeinen Formel $Me(OR)_n$ können beispielsweise entsprechend der allgemeinen Reaktionsgleichung

$$MeX_n + n\ ROH + n\ NH_3 \rightarrow Me(OR)_n + n\ NH_4X$$

mit

n = 1 bis 4 und
X = Halogen,

wobei anstelle von Ammoniak beispielsweise auch Alkalimetalle eingesetzt werden können.

Als Metalle sind alle Metalle, die Verbindungen des Typs $Me(OR)_n$ (Bedeutung der Symbole s.o.) bilden können, geeignet, insbesondere Metalle der III. Hauptgruppe und der IV. Nebengruppe. Die Katalysatoren werden in einer Menge von 0,02 Gew.-% bis 0,2 Gew.-%, bezogen auf die eingesetzte Phosphorverbindung, angewendet und der phosphorhaltigen Ausgangssubstanz zugesetzt.

Der Katalysator kann als Gesamtmenge vor der Umsetzung der phosphorhaltigen Ausgangssubstanz mit den Alkylenoxiden oder in zwei oder mehreren Teilmengen vor und während der Reaktion zugegeben werden. Als phosphorhaltige Ausgangssubstanzen werden vorzugsweise Phosphortri- und/oder Phosphoroxihalogenide, insbesondere Phosphortrichlorid und/oder Phosphoroxichlorid, eingesetzt und einzeln oder im Gemisch untereinander mit den Alkylenoxiden zur Reaktion gebracht. Die Umsetzung wird bei Temperaturen von 0 bis 100°C und drucklos oder unter leichtem Überdruck bis 0,1 MPa durchgeführt. Die phosphorhaltige Ausgangssubstanz wird im Reaktionsgefäß vorgelegt und nach Katalysatorzugabe das entsprechende Alkylenoxid kontinuierlich eindosiert. Nach dem Ende der Alkylenoxiddosierung wird bei Temperaturen von 60 bis 120°C eine Nachreaktionsphase angeschlossen und abschließend werden durch eine Vakuumdestillation bzw. ein Stickstoffstripping bei Temperaturen von 90 bis 150°C und Drücken < 0,05 MPa leichtflüchtige Verunreinigungen entfernt. Eine Nachbehandlung des Katalysators ist nicht erforderlich.

Die Vorteile des erfindungsgemäßen Verfahrens liegen in einer guten Mischbarkeit des Katalysators in den Ausgangssubstanzen, was zu einer weitgehenden Verhinderung von Nebenreaktionen führt. Auch die Bildung saurer Nebenprodukte wird unterdrückt, was an den extrem niedrigen Säurezahlen der phosphorhaltigen Alkoxylierungsprodukte sichtbar ist. Durch die Möglichkeit, auf Kokatalysatoren zu verzichten, treten keine Farbverschlechterungen der Endprodukte auf.

Beispiele

Beispiel 1

In einem 2,5-1-Mehrhalskolben mit Rührer, Rückflußkühler und Tropftrichter wurden 614 g Phosphoroxichlorid, 0,2 g Tetraethoxyzirkonium eingefüllt, mit Stickstoff inertisiert und auf 80°C erwärmt. Bei dieser Temperatur wurden 581 g Ethylenoxid eindosiert und durch intensives Rühren zur Umsetzung gebracht. Nach Abschluß der Ethylenoxid-Dosierung wurde bei 80°C wird eine Nachreaktion angeschlossen. Danach wurde das Reaktionsprodukt mit Stickstoff gestrippt. Es entstand ein als Flammschutzmittel für Polyurethane einsetzbares, nebenproduktfreies und hydrolysebeständiges Tris-chlor-ethylphosphat (TCA) mit folgenden Kennzahlen:

| Säurezahl | 0,087 mg KOH/g |
|---|---|

(fortgesetzt)

| Viskosität bei 25°C | 68,44 mPas |
|---|---|
| Wassergehalt | 0,018 % |
| Farbe (Platin) | 40 |
| Brechungsindex bei 25°C | 1,4640 |
| ionisierbares Chlor | 2,5 ppm |

Beispiel 2

In einem 2,5-1-Mehrhalskolben mit Rührer, Rückflußkühler und Tropftrichter wurden 614 g Phosphoroxichlorid und 0,1 g Tripropoxyaluminium eingefüllt, mit Stickstoff inertisiert und auf 70°C erwärmt. Bei dieser Temperatur wurden 766 g Propylenoxid eindosiert und durch intensives Rühren zur Umsetzung gebracht. Nach Abschluß der Propylenoxid-Dosierung wurde bei 70°C eine Nachreaktion angeschlossen, danach wurden nicht umgesetztes Propylenoxid und andere leichtflüchtige Bestandteile mittels Stickstoff-Strippen entfernt. Das entstandene Trichlorpropylphosphat enthielt keine Nebenprodukte, war hydrolysestabil und konnte als Flammschutzmittel in Polyurethanen eingesetzt werden. Es hatte folgende Kennzahlen:

| Säurezahl | 0,079 mg KOH/g |
|---|---|
| Viskosität bei 25°C | 69,12 mPas |
| Wassergehalt | 0,006 % |
| Farbe (Platin) | 35 |
| Brechungsindex bei 25°C | 1,4618 |
| ionisierbares Chlor | 3,3 ppm |

Beispiel 3

In einen 2,5-1-Mehrhalskolben mit Rührer, Rückflußkühler und Tropftrichter wurden 614 g Phosphoroxichlorid, 0,03 g Tetrabutoxytitan eingefüllt, mit Stickstoff inertisiert und auf 60°C erwärmt. Bei dieser Temperatur wurden 766 g Propylenoxid eindosiert und durch intensives Vermischen zur Umsetzung gebracht. Nach Abschluß der Propylenoxid-Dosierung wurde bei 60°C eine Nachreaktion angeschlossen, danach wurden nicht umgesetztes Propylenoxid und andere leichtflüchtige Bestandteile durch Strippen mit Stickstoff entfernt. Das entstandene Trichlorpropylphosphat war ohne Nebenprodukte, hydrolysestabil und konnte als Flammschutzmittel in allen Polyurethan-Systemen eingesetzt werden. Es hatte folgende Kennzahlen:

| Säurezahl | 0,035 mg KOH/g |
|---|---|
| Viskosität bei 25°C | 64,5 mPas |
| Wassergehalt | 0,012 % |
| Farbe (Platin) | 35 |
| Brechungsindex bei 25°C | 1,4638 |
| ionisierbares Chlor | 1,2 ppm |

Die Bestimmung der Viskosität erfolgte nach DIN 53 015, die des Wassergehaltes nach DIN 51 777, die der Farbzahl nach DIN 53 995, die des Brechungsindesx nach DIN 51 523, die der Säurezahl nach DDR-Fachbereichsstandard SYS 9003 und die des ionisiserbaren Chlors nach DDR-Fachlbereichsstandard SYS 9503.

## Patentansprüche

1. Verfahren zur Herstellung von phosphorhaltigen Alkoxylierungsprodukten durch Umsetzung von Phosphortri- und/ oder Phosphoroxihalogenid mit Alkylenoxiden bei Temperaturen von 0 bis 100°C, unter Normaldruck oder Drücken bis 0,1 MPa im Beisein von Katalysatoren, dadurch gekennzeichnet, daß als Katalysatoren Verbindungen der allgemeinen Formel

$$Me(OR)_n$$

   mit

   Me - Metallion,
   n - 1 bis 4,
   R - lineare oder verzweigte Alkylgruppe mit 2 bis 8 Kohlenstoffatomen

   in einer Menge bis 0,2 Gew.-%, bezogen auf die eingesetzte Phosphorverbindung, eingesetzt werden und das verwendete Alkylenoxid das gleiche Kohlenstoffgerüst sowie die gleiche oder um 1 verminderte Zahl von Kohlenstoffatomen aufweist wie R.

2. Verfahren nach Anspruch 1, dadurch gekennzeichnet, daß als Alkylenoxid vorzugsweise Ethylenoxid und/oder Propylenoxid eingesetzt werden.

3. Verfahren nach Anspruch 1 und 2, dadurch gekennzeichnet, daß der Katalysator in einer Menge von 0,02 bis 0,2 Gew.-%, bezogen auf die phosphorhaltige Ausgangssubstanz eingesetzt wird.

4. Verfahren nach den Ansprüchen 1 bis 3, dadurch gekennzeichnet, daß nach dem Ende der Alkylenoxiddosierung bei Temperaturen von 60 bis 120°C eine Nachreaktionsphase angeschlossen wird.

## Claims

1. A process for the preparation of phosphorus-containing alkoxylation products by reacting phosphorus trihalide and/or phosphorus oxyhalide with alkylene oxides at from 0 to 100°C, under atmospheric pressure or at up to 0.1 MPa, in the presence of catalysts, wherein the catalysts employed are compounds of the formula

$$Me(OR)_n$$

   where

   Me is a metal ion,
   n is from 1 to 4, and
   R is linear or branched alkyl having 2 to 8 carbon atoms,

   in an amount of up to 0.2% by weight, based on the phosphorus compound employed, and the alkylene oxide used has the same carbon skeleton and the same number of carbon atoms as R, or one less.

2. A process as claimed in claim 1, wherein the alkylene oxide employed is preferably ethylene oxide and/or propylene oxide.

3. A process as claimed in claim 1 or 2, wherein the catalyst is employed in an amount of from 0.02 to 0.2% by weight, based on the phosphorus-containing starting substance.

4. A process as claimed in any of claims 1 to 3, wherein the end of the alkylene oxide metering is followed by a post-reaction phase at from 60 to 120°C.

## Revendications

1. Procédé de préparation de produits d'alcoxylation contenant du phosphore par réaction de trihalogénure de phosphore et/ou d'oxyhalogénure de phosphore avec des oxydes d'alkylène à des températures de 0 à 100 °C à pression normale ou à des pressions jusqu'à 0,1 MPa en présence de catalyseurs, caractérisé en ce qu'on utilise à titre de catalyseurs des composés répondant à la formule générale

$$Me(OR)_n$$

   avec

   Me = ion métallique
   n = 1 à 4
   R = groupe alkyle linéaire ou ramifié avec 2 à 8 atomes de carbone

   en une quantité de jusqu'à 0,2 % en poids, par rapport au composé de phosphore utilisé, et en ce que l'oxyde d'alkylène utilisé présente le même squelette carboné, de même que le même nombre d'atomes de carbone, ou ce nombre diminué d'une unité, que le groupe R.

2. Procédé selon la revendication 1, caractérisé en ce qu'on utilise à titre d'oxyde d'alkylène de préférence de l'oxyde d'éthylène et/ou de l'oxyde de propylène.

3. Procédé selon la revendication 1 et 2, caractérisé en ce qu'on utilise le catalyseur en une quantité de 0,02 à 0,2 % en poids, par rapport à la substance de départ contenant du phosphore.

4. Procédé selon les revendications 1 à 3, caractérisé en ce qu'on fait suivre à la fin du dosage d'oxyde d'alkylène à des températures de 60 à 120 °C une phase de réaction subséquente.